# EUROPÄISCHE PATENTSCHRIFT

(11) **EP 2 116 742 B1**
(45) Veröffentlichungstag und Bekanntmachung des Hinweises auf die Patenterteilung: **20.06.2012**
(21) Anmeldenummer: 09450086.5
(22) Anmeldetag: 22.04.2009
(51) Int. Cl.: F16G 13/16, H02G 11/00

(54) **Kabelführungselement**
Cable guide element
Elément de guidage de câbles

(30) Priorität: 05.05.2008 AT 7172008
(43) Veröffentlichungstag der Anmeldung: 11.11.2009
(73) Patentinhaber: Kübel, Johann, 3072 Kasten (AT)
(72) Erfinder: Kübel, Johann, 3072 Kasten (AT)
(74) Vertreter: Wildhack, Andreas

(56) Entgegenhaltungen:
- EP-A2- 1 347 201

## Beschreibung

Die Erfindung betrifft ein kettenförmiges Kabelführungselement gemäß dem Anspruch 1.

Derartige Kabelführungselemente werden vor allem für das Verlegen von Kabeln in Abwasserleitungen verwendet.

Als Kabel werden allgemein biegsame Gegenstände verstanden, welche bei im wesentlichen konstanten Querschnitt eine beträchtliche Längserstreckung, wie z.B. Seite, Kunststoffrohre, od. dgl., aufweisen.

Generell besteht beim Stand der Technik das Problem, dass beim Verlegen von Kabeln in Abwasserschächten das Kabel sowie ein Kabelroboter durch einen vertikalen Schacht in den Kanal eingebracht werden müssen. Üblicherweise verläuft der Einstiegsschacht senkrecht zu einem Kanalrohr, das im wesentlichen waagrecht verläuft, sodass beim Einmünden des Schachtes in den Kanal eine Kante vorliegt. Problematisch stellt sich das Einbringen eines Kabels über den Schacht in den Kanal dar, da die Führung des Kabels im Bereich dieser Kante durch einen großen Widerstand aufgrund von Reibung und Biegung erschwert und gegebenenfalls das Kabel beschädigt wird.

In der Europäischen Patentanmeldung EP 1 347 201 A2 ist eine aus miteinander flexibel verbundenen Teilkörpern zusammengesetzte Kabelführungskette bekannt, wobei jeder Teilkörper aus einem Paar von einander gegenüberliegenden beabstandeten Platten gebildet ist, die über Verbindungsstangen miteinander verbunden sind. Dabei ist eine Rolle vorgesehen, deren beiden Ende an Lagerteilen gestützt sind, die jeweils an einer der Platten angeordnet sind, sodass diese Rolle nicht aus den Lagern entweichen kann. Weiters ist vorgesehen, dass zumindest eine der Lagerteile als durchgängige Öffnung ausgebildet ist, die größer ist als der Außendurchmesser der Rolle und in der Platte angeordnet ist, wobei der Lagerteil ferner ein Verschlussteil zum Sichern der Rolle im Lagerteil aufweist und eine Rollenwelle im Verschlussteil gelagert ist.

Es sind einige Vorrichtungen zum Einführen von Kabeln aus dem Stand der Technik bekannt, welche durch komplizierte und fehleranfällige Mechanismen mit dem Schacht, sowie dem Kanal verschraubt sind. Die Montage einer derartigen Vorrichtung ist ausgesprochen aufwendig und führt insbesondere zu einem großen Zeit- und Montageaufwand.

Die Aufgabe der Erfindung ist es, die eingangs genannten Probleme zu lösen und ein Kabelführungselement zu schaffen, welches rasch montiert und demontiert werden kann und trotzdem einen hohen Grad an Stabilität aufweist und Verschlingungen des Kabels effizient vermeidet.

Die Erfindung löst das Problem mit einem Kabelführungselement mit den Merkmalen des Anspruchs 1.

Vorteilhaft ist es, dass das Kabelführungselement einfach mittels eines Kabelroboters im Kantenbereich des Schachtes bzw. des Kanals ausgerichtet werden kann und in seiner Lage ohne weitere äußere Fixierungen verbleibt. Weiters ist das Einbringen eines Kabels in das Kabelführungselement einfach und unproblematisch möglich ist und das Kabel kann aus dem Kabelführungselement nicht entweichen. Die Demontage des Kabelführungselements ist sehr einfach, da das Lösen einer starren Verbindung zwischen dem Kabelführungselement und dem Schacht bzw. dem Kanal entfällt.

Mit den Merkmalen des Anspruchs 2 wird eine verbesserte Schwerpunktlage erreicht.

Mit den Merkmalen der Ansprüche 3 und 4 wird die Anordnung der Gegengewichte vereinfacht.

Die Merkmale des Anspruches 5 geben vorteilhafte Materialien und Dichteverhältnisse, insbesondere für die Gegengewichte, an.

Die Merkmale des Anspruches 6 vereinfachen den Aufbau der Glieder

Mit dem Merkmal des Anspruchs 7 wird erreicht, dass das erfindungsgemäße Kabelführungselement einfach in seine Gebrauchslage gebracht und in seiner Gebrauchslage einfach fixiert werden kann. Ferner wird die Ausrichtung der Kabelführungseinheit mittels eines ferngesteuerten Roboters erleichtert.

Die Merkmale des Anspruchs 8 gewährleisten eine leichte Durchgängigkeit des Kabels in dem Kabelführungselement und verhindern das Verschlingen des Kabels.

Mit den Merkmalen der Ansprüche 9 und 10 können stabile Glieder des Kabelführungselements einfach hergestellt werden.

Mit den Merkmalen des Anspruchs 11 kann ein Kabelführungselement mit geringem Platzbedarf hergestellt werden.

Mit den Merkmalen des Anspruchs 12 kann die Ausgangslage des erfindungsgemäßen Kabelführungselements besonders genau eingestellt werden.

Mit den Merkmalen der Ansprüche 13 und 14 werden besonders vorteilhafte Ausgestaltungen der Kabelführungselemente dargestellt, welche ein leichtgängiges Verschieben des Kabels gegenüber dem Kabelführungselements ermöglichen.
Figur 1 zeigt das Kabelführungselement in Schrägansicht im verschwenkten Zustand.
Figur 2 zeigt das Kabelführungselement in Seitenansicht im verschwenkten Zustand.
Figur 3 zeigt das Kabelführungselement in Seitenansicht von der entgegengesetzten Seite her gesehen.
Figur 4 zeigt ein Glied eines Kabelführungselements in Vorderansicht.
Figur 5 zeigt ein Kabelführungselement in seiner Ausgangslage in Seitenansicht.
Figur 6 zeigt ein Kabelführungselement in verschwenktem Zustand bzw. in Gebrauchslage in Seitenansicht, wobei ein Kabel in das Kabelführungselement eingebracht ist und das Kabelführungselement an der Übergangskante zwischen einem Schacht und einem Kanalrohr anliegt.

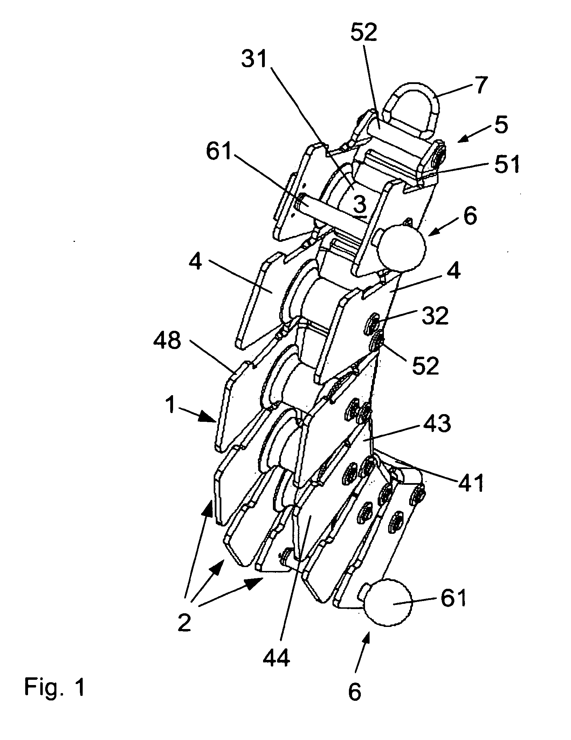

In Figur 1 ist ein kettenförmiges Kabelführungselement 1 dargestellt. Das Kabelführungselement 1 umfasst eine Vielzahl von Gliedern 2, welche im wesentlichen gleich aufgebaut sind. Die Anzahl der Glieder 2 eines Kabelführungselements 1 beträgt je nach gewünschtem Krümmungsradius und Knickwinkel vorteilhafterweise zwischen 4 und 10. Die Glieder 2 des Kabelführungselements 1 sind kettenartig aneinander gereiht, wobei jedes Glied 2, insbesondere angeformte, Lager- bzw. Verbindungselemente 5 in Form eines, allenfalls einstückig angeformten, abgekröpften Lagerflansches 51 aufweist, welcher mit dem jeweils nächsten Glied 2 schwenkbar verbunden ist. Vom jeweils nächstem Glied 2 wird der Lagerflansch 51 aufgenommen, sodass das gegenseitige Verschwenken zweier benachbarter Glieder 2 möglich ist. Dies wird dadurch erreicht, dass sowohl im gekröpften Lagerflansch 51 als auch im jeweils nächstfolgenden Glied 2 zugeordnete kreisförmige Ausnehmungen vorgesehen sind, welche von Lagerbolzen 52 durchsetzt sind.

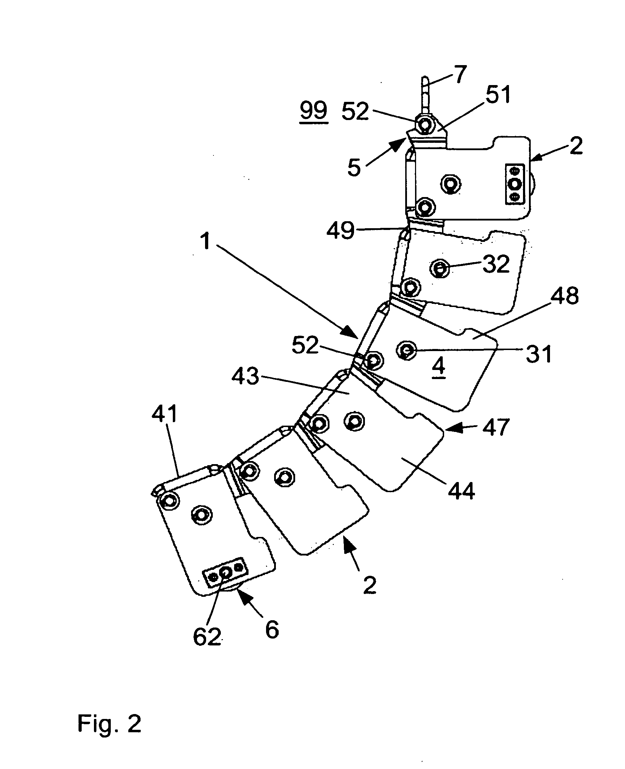

Wie aus der Figur 2 ersichtlich ist, sind alle Glieder 2 bezüglich ihrer jeweils benachbarten oder nachfolgenden Glieder 2 in der selben, von der Zeichnungsebene dargestellten, Verschwenkebene 99 gegeneinander verschwenkbar. Ferner weist jedes der Glieder 2 zwei parallel zur Verschwenkebene 99 des Kabelführungselements 1 verlaufende parallele Platten 4 auf. In einer bevorzugten Ausführungsform kann vorgesehen werden, dass die beiden parallelen Platten 4 aus einem einzigen bzw. demselben Stanzteil gebildet sind; wobei die beiden parallelen 4 Platten mit einer weiteren Platte 41 ein U-Profil 47 bilden. Die Höhe der Glieder 2 bzw. die Länge der parallelen Platten 4 liegt zwischen 10 und 20 cm. Die weitere Platte 41 ist weitestgehend rechteckig ausgebildet, wobei ihre Länge der Länge eines Glieds 2 und die Breite der Breite des Kabelführungselements 1 entspricht.

Selbstverständlich kann das U-Profil 47 auch durch Zusammenschweißen oder Löten dreier getrennter Formteile gebildet sein. Die Glieder 2 weisen eine Längserstreckung in Kettenrichtung von etwa 5 bis 15 cm auf. Die Breite des Kabelführungselements 1 ist abhängig von der Dicke eines zu verlegenden Kabels 8 und liegt im Bereich zwischen 5 und 15 cm. Die parallelen Platten 4 sind rechteckig ausgebildet, wobei die Breite der parallelen Platten 4 der Länge eines Glieds 2 und die Länge der parallelen Platten 4 der Höhe des Kabelführungselements 1 entspricht.

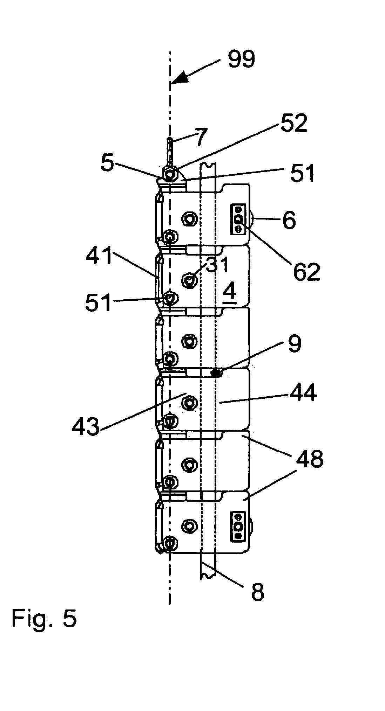

Es kann vorgesehen werden, dass die parallelen Platten 4 in ihrem von der weiteren Platte 41 entfernten Endbereich 44 an zumindest einer der den benachbarten Gliedern 2 zugewandten Stirnflächen eine Nase 48 aufweisen. Die Nasen 48 stehen dabei vorzugsweise so weit in Richtung des nächstgelegenen Glieds 2 ab, dass bei Anliegen der Nasen 48 am jeweils benachbarten Glied 2 alle Glieder 2 parallel bzw. längs einer Geraden verlaufend ausgerichtet sind, wie in Fig. 5 dargestellt. Derartige Nasen 48 können zu dem jeweils nächstfolgenden Glied 2 hin oder zu beiden benachbarten Gliedern 2 hin ausgebildet sein.

Die Glieder 2 des Kabelführungselements 1 sind in Ausgangslage parallel bzw. entlang einer geraden Linie verlaufend angeordnet. Die Ausgangslage ist dadurch definiert, dass die Glieder 2 parallel bzw. längs einer Geraden verlaufend angeordnet sind. Ein wesentlicher Vorteil der Ausbildung derartiger Nasen 48 ist, dass damit das Verschwenken des Kabelführungselements 1 über eine vorgegebene Ausgangslage hinaus durch die anliegenden Nasen 48 der parallelen Platten 4 verhindert wird. Die Lage, in der alle Nasen 48 an den jeweils benachbarten Gliedern 2 anliegen stellt in diesem Fall die in Fig. 5 gezeigte Ausgangslage dar.

Das Kabelführungselement 1 weist eine Vielzahl von Führungsmitteln bzw. Führungselementen 3, beispielsweise in Form von Führungsrollen 31, auf, welche an den einzelnen Gliedern 2 des Kabelführungselements 1 angeordnet sind. Diese Führungsrollen 31 sind auf Lagerwellen 32 gelagert, welche die parallelen Platten 4 durchsetzen. Diese Führungsrollen 31 sind zwischen den parallelen Platten 4 angeordnet, wobei die Achsen bzw. die Lagerwellen 32 der Führungsrollen 31 normal zur Verschwenkebene 99 des Kabelführungselements 1 bzw. parallel zu den Verschwenkachsen stehen, um welche die benachbarten Glieder 2 verschwenkbar sind.

Eine besondere Ausführungsform ergibt sich, wenn jedes der Glieder 2 eine Führungsrolle 31 aufweist. Die Führungsrollen 31 sind auf den Gliedern 2 drehbar gelagert. Die Führungsrollen 31 sind in ihrem Querschnitt zu den Enden hin vergrößert, wobei insbesondere der Außenmantel der Führungsrollen 31 im Längsschnitt die Form einer gekrümmten Kurve aufweist.

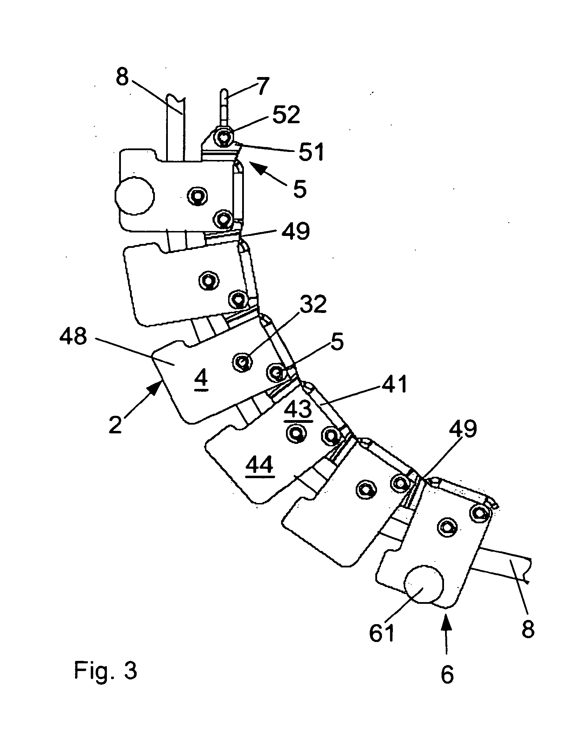

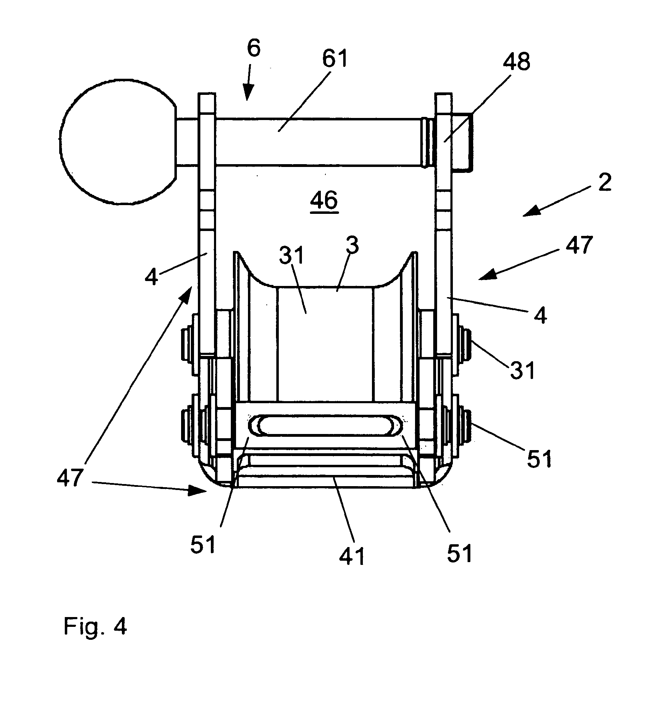

Bei einem erfindungsgemäßen Kabelführungselement 1 ist es zweckmäßig, zumindest so viele Führungsrollen 31 vorzusehen, dass das Kabel 8 ausschließlich durch die Führungsrollen 31 umgelenkt wird und nicht an den übrigen Bestandteilen des Kabelführungselements 1 streift. Wie aus den Figuren 1 bis 6 ersichtlich, sind die Führungsrollen 31 nahe, aber im Abstand von der weiteren Platte 41 angeordnet. Dieser Abstand liegt im Bereich zwischen 1 mm und 2cm. Um eine optimale Gleichgewichtslage des erfindungsgemäßen Kabelführungselements 1 zu gewährleisten, ist zweckmäßig vorzusehen, dass der Abstand der Lagerwellen 32 von der weiteren Platte 41 so klein wie möglich gewählt wird. Die gegeneinander verschwenkbaren Verbindungselemente 5, umfassend die Lagerflansche 51 sowie die Bolzen 52, befinden sich in dem Endbereich 43 der parallelen Platten 4 im Nahebereich der weiteren Platte 41.

Zum Hinablassen des Kabelführungselements 1 in einen Schacht 91 kann insbesondere am freien Lagerflansch 51 des letzten Glieds 2 ein Halteelement 7, z.B. ein Haken oder eine Öse, angeordnet sein. Über dieses Halteelement 7 kann das Kabelführungselement 1 in den Schacht 91 abgesenkt und im Schacht 91 in seiner Position variiert werden.

In dem dem Endbereich 43 gegenüberliegenden Endbereich 44 der parallelen Platten 4 sind an zumindest zwei Gliedern 2, vorzugsweise dem ersten und dem letzten Glied 2, Gewichte 6 angeordnet. Entscheidend für das Funktionieren der Erfindung ist, dass der Schwerpunkt 9 des Kabelführungselements 1 in seiner Ausgangslage und/oder frei abhängend im Bereich zwischen der Lagerachse der Führungsrolle 31 und dem gegenüberliegenden Endbereich 44 liegt. Die Gegengewichte 6 sind dabei insbesondere in Form eines Bolzens 61 realisiert. Für diese Bolzen 61 ist insbesondere im ersten oder letzten Glied 2 jeweils eine Ausnehmung in den beiden parallelen Platten 4 vorgesehen, wobei die Gegengewichte 6 in Form des Bolzens 61 diese Ausnehmung durchsetzen bzw. durch diese hindurchgeführt sind. Die zentrale Achse des Bolzens 61 liegt dabei im gegenüberliegenden Endbereich 44 der parallelen Platten 4, parallel zur Lagerwelle 32 der Führungsrollen 31 und/oder normal zu den parallelen Platten 4.

Der Bereich im Inneren des U-Profils 47 bildet, wie in Figl 4 dargestellt, einen Aufnahmeraum 46 für das zu führende Kabel 8, welcher auf den Seiten von den parallelen Platten 4, an einem Ende von den Führungsrollen 31 und am gegenüberliegenden Ende von den Bolzen 61 begrenzt ist.

Das Verhältnis der Dichte des Materials der Gewichte 6 bzw. der Bolzen 61 zur durchschnittlichen Dichte der übrigen Teile bzw. Komponenten des Kabelführungselements 1 ist zumindest 2:1 und liegt insbesondere im Bereich zwischen 4:1 und 6:1. Vorteilhafterweise kann dieses Dichteverhältnis dadurch erzielt werden, dass die Gegengewichte 6 bzw. die Bolzen 61 im Wesentlichen aus einer Eisenlegierung bestehen, während die übrigen Bestandteile des Kabelführungselements 1 mit Kunststoff oder Leichmetall, insbesondere Aluminium, gebildet sind.

Zur Festlegung einer maximalen Krümmung bzw. eines minimalen Krümmungsradius ist an den parallelen Platten 4 bzw. an den weiteren Platten 41 ein Begrenzungselement 49 ausgebildet. Dieses Begrenzungselement 49 kann in Form eines Anschlags ausgebildet sein, welcher bei einem vorgegebenen Verschwenkungswinkel von insbesondere 5° bis 25° bezüglich der Ausgangslage ein weiteres Verschwenken verhindert. In einer bevorzugten Ausführungsform kann das Begrenzungselement 49 mit der weiteren Platte 41 fest verbunden und in Richtung des nächstfolgenden Glieds 2 gerichtet sein oder als Fortsatz der weiteren Platte 41 in Richtung des nächstfolgenden Glieds 2 ausgebildet sein. Beim Verschwenken des nächstfolgenden Glieds 2 gegenüber dem Begrenzungselement 49 wird der Verschwenkweg mechanisch durch des Anliegen des Begrenzungselements 49 an der Platte 41 des nächstfolgenden Gliedes 2 begrenzt und somit ein minimaler Krümmungsradius vorgegeben.

Alternativ kann dieses Begrenzungselement 49 auch an den Lagerflanschen 51 und/oder an den bzw. im Bereich der Ausnehmungen für die die Lagerflansche 51 lagernden Bolzen 52 angeordnet sein. In diesem Fall weisen sowohl der Lagerflansch 51 als auch die Ausnehmung für den zugehörigen Bolzen 52 an ihrem Rand einen, insbesondere bezüglich des Glieds 2 nach innen gerichteten Ausschlagwinkel als Begrenzungselement 49 auf, wobei bei Erreichen eines vorgegebenen Maximalwinkels die beiden Ausschlagwinkel aneinander anliegen und ein weiteres Verschwenken der beiden Glieder 2 verhindern.

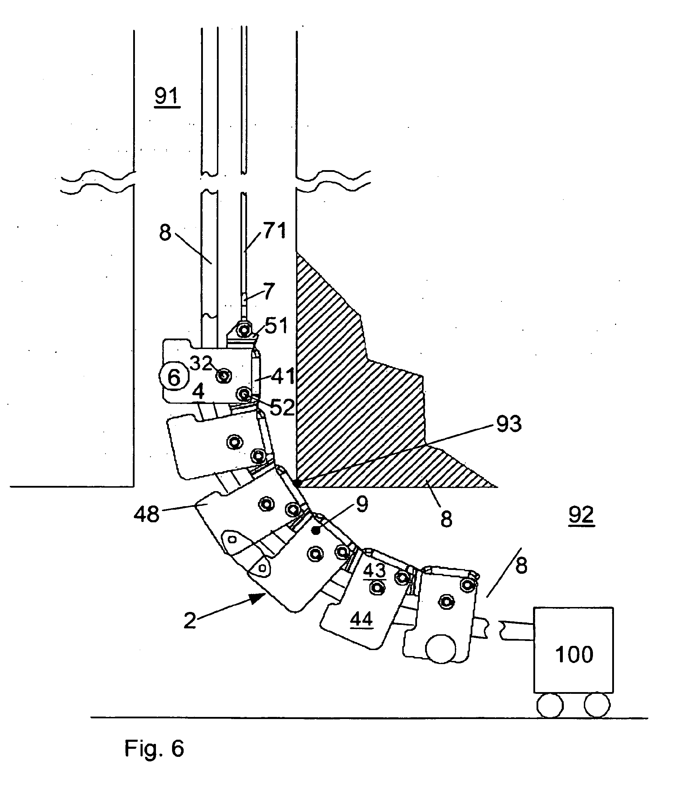

Fig. 6 zeigt die Funktionsweise des erfindungsgemäßen Kabelführungselements 1. Zunächst wird das erfindungsgemäße Kabelführungselement 1 an seinem Halteelement 7, wie in Fig. 5 dargestellt, senkrecht zum Boden aufgehängt bzw. in dieser Lage in den Schacht 91 abgesenkt. Der Schwerpunkt 9 des Kabelführungselements 1 befindet sich dabei zwischen dem Kabel 8 und den Gegengewischten 6 bzw. den Bolzen 61 bzw. nahe dem bzw. im Endbereich 44 der Platten 4. Vorteilhaft wird in diesem Zustand das Kabel 8 in das Kabelführungselement 1 eingebracht und durch die beiden Bolzen 61 gegen ein etwaiges Herausrutschen aus dem Kabelführungselement 1 gesichert. Sobald sich ein Kabelroboter 100, welcher an das kanalseitige Ende des Kabels 8 angeschlossen ist, in Richtung des Kanals 92 vom Schacht 91 weg vorwärts bewegt, wird das Kabelführungselement 1 von seiner Ausgangslage ausgelenkt bzw. gekrümmt. Durch die Beschränkung der Verschwenkbarkeit durch die Begrenzungselemente 49 ist lediglich eine Verschwenkung in eine Verschwenkrichtung möglich. Bewegt der Kabelroboter 100 das Kabel 8 entgegen der Verschwenkrichtung des Kabelführungselements 1 ist dieses aufgrund seiner Schwerpunktlage in einem instabilen Zustand, sodass selbst kleinste Änderungen zu einem Umkippen des Kabelführungselements 1 in eine stabile, durch die Krümmung bedingte, in Fig. 6 dargestellte, Lage führen. Ein Kippen in eine Lage ist nicht mehr möglich bzw. wird auch durch das Anliegen an der Kante 93 verhindert.

Dadurch wird auf einfache Art und Weise die Lage des Kabelführungselements 1 festgelegt, wobei die Lage durch Zugbeaufschlagung eines an dem Haltelement 7 angeschlossenen Seils 71 weiter stabilisiert werden kann. Dabei verhakt sich das Kabelführungselement 1 mit der durch die Einmündung des Schachts 91 in den Kanal 92 gebildetem Kante 93. Durch eine Gestaltung der der Kante 93 zugewandten Seite der weiteren Platte 41 des Kabelführungselements 1 mit elastischen Materialien kann ein Abrutschen zusätzlich verhindert werden.

Solange der Kabelroboter 100 sich im Schacht 91 befindet, ist die Position des Kabelführungselements 1 fixiert, wobei das Kabel 8 über die Führungsrollen 31 hinweggleitet und in den Kanal 92 eingebracht werden kann. Ist dieser Vorgang beendet, kann die Zugbeaufschlagung des Seils 71, welches das Kabefführungselement 1 trägt, verriegelt werden und der nun nicht mehr mit dem Kabel 8 verbundene Kabelroboter 100 aus dem Kanal 92 zurückgefahren werden. Gleichzeitig wird auch das Kabel 8 gelockert und das Kabelführungselement 1 am Haltelement 7 mit dem Seil 71 aus dem Schacht 91 entfernt.

Alternativ kann vorgesehen werden, dass die beiden parallelen Platten 4 mit einem die gegenüberliegenden Endbereiche 44 eines Gliedes 2 verbindenden Steg verbunden sind. Die Schwerpunktlage ist hierdurch verbessert, allerdings ist das Einbringen des Kabels 8 in das Kabelführungselement 1, insbesondere bei eine großen Anzahl von Gliedern 2, schwieriger zu realisieren.

Im abgehängten Zustand des Kabelführungselementes 1 hängt das unterste Glied 2 aufgrund seines Eigengewichtes um einen gewissen Winkel nach verschwenkt.

Derartige Stege verhindern ein Austreten des Kabels 8 aus dem Aufnahmeraum 46.

## Patentansprüche

1. Kabelführungselement, umfassend eine Vielzahl von kettenförmig verbundenen Gliedern (2), welche in einer Ausgangslage, insbesondere bei frei abhängendem Kabelführungselement (1), entlang einer geraden Linie angeordnet sind,
- wobei alle Glieder (2) bezüglich ihrer jeweils benachbarten Glieder (2) in derselben Verschwenkebene (99) gegeneinander verschwenkbar sind,
- wobei eine Anzahl von Gliedern (2), vorzugsweise alle Glieder (2), zwei parallel zur Verschwenkebene (99) des Kabelführungselements (1) verlaufende und zwischen sich einen Aufnahmeraum (46) für ein zu führendes Kabel bildende, parallele Platten (4) aufweist,
- wobei eine Anzahl von Gliedern (2), vorzugsweise alle Glieder (2), im Aufnahmeraum (46) Führungselemente (3) zum Führen eines Kabels aufweist.
- wobei in einem Endbereich (43) der parallelen Platten (4) Verbindungselemente (5) vorgesehen sind, die die gegeneinander verschwenkbaren Glieder (2) verbinden,
**dadurch gekennzeichnet,**
**dass** in einem dem Endbereich (43) gegenüberliegenden Endbereich (44) der parallelen Platten (4) an zumindest zwei der Glieder (2) Gegengewichte (6) angeordnet sind,
sodass der Schwerpunkt (9) des Kabelführungselements (1) in seiner Ausgangslage, insbesondere in seiner frei abhängenden Lage, im Aufnahmeraum (46) zwischen den Führungselementen (3) und den gegenüberliegenden Endbereichen (44) liegt.

2. Kabelführungselement nach Anspruch 1, **dadurch gekennzeichnet, dass** die Gegengewichte (6) in Form von Bolzen (61) oder Stegen realisiert sind, welche in dem gegenüberliegenden Endbereich (44) der parallelen Platten (4) angeordnet sind bzw. diese Endbereiche (44) verbinden.

3. Kabelführungselement nach Anspruch 1 oder 2, **dadurch gekennzeichnet, dass** die Gegengewichte (6) zumindest am ersten und am letzten Glied (2) angeordnet sind.

4. Kabelführungselement nach einem der vorangegangenen Ansprüche, **dadurch gekennzeichnet, dass** in beiden parallelen Platten (4) jeweils eine Ausnehmung (62) vorgesehen ist, durch welche die Gegengewichte (6) in Form eines Bolzens (61) hindurch geführt sind,
- wobei gegebenenfalls die zentrale Achse des Bolzens (61) senkrecht zur Verschwenkebene (99) verläuft und/oder normal auf die parallelen Platten (4) steht.

5. Kabelführungselement nach einem der vorangegangenen Ansprüche, **dadurch gekennzeichnet, dass**
das Verhältnis der Dichte des Materials der Gegengewichte (6) oder der Bolzen (61) zur durchschnittlichen Dichte des Materials der übrigen Teile des Kabelführungselements (1) zumindest 2:1 beträgt, insbesondere im Bereich zwischen 4:1 und 6:1, liegt und/oder die Gegengewichte (6) im Wesentlichen aus einer Eisenlegierung bestehen, wogegen die übrigen Bestandteile des Kabelführungselements (1) mit Kunststoff und/oder Leichtmetallen, insbesondere Aluminium, gebildet sind.

6. Kabelführungselement nach einem der vorangehenden Ansprüche, **dadurch gekennzeichnet, dass** die Platten (4) an jeweils einem ihrer Endbereiche, insbesondere im Endbereich (43), mit einer weiteren Platte (41) verbunden sind, wobei die parallelen Platten (4) und die weitere Platte (41) jeweils eines Glieds (2) einstückig als U-Profil (47) in Form eines gebogenen Stanzteiles ausgebildet sind.

7. Kabelführungselement nach einem der vorangegangenen Ansprüche, **dadurch gekennzeichnet, dass**
die Glieder (2) aus ihrer Ausgangslage oder frei abhängenden Stellung nur in eine vorgegebene Verschwenkrichtung verschwenkbar sind, während eine Verschwenkung in die entgegengesetzte Richtung unterdrückt oder verhindert ist.

8. Kabelführungselement nach einem der vorangegangenen Ansprüche, **dadurch gekennzeichnet,**
- **dass** benachbarte Glieder (2) auf der weiteren Platte (41) und/oder auf den parallelen Platten (4) Begrenzungselemente (49) aufweisen, welche bei einer erreichten Verschwenklage oder bei einem vorgegebenen Verschwenkungswinkel, insbesondere von 5°-25° bezüglich der Ausgangslage, ein weiteres Verschwenken, insbesondere durch Aneinanderliegen, verhindern.

9. Kabelführungselement nach einem der vorangegangenen Ansprüche, **dadurch gekennzeichnet,**
- **dass** die Verbindungselemente (5) in Form von mit den Gliedern (2) starr verbundene, insbesondere aus demselben Stanzteil gebogene, Lagerflanschen (51) ausgebildet sind, und die Lagerflansche (51) über Lagerbolzen (52) oder Nieten (52) mit einem Flansch oder einer Platte (4) eines benachbarten Gliedes (2) verschwenkbar verbunden sind.

10. Kabelführungselement nach einem der vorangegangenen Ansprüche, **dadurch gekennzeichnet,**
- **dass** die Führungselemente (3), vorzugsweise die Achsen von die Führungselemente (3) bildenden Führungsrollen (31), normal zur Verschwenkebene (99) des Kabelführungselements (1) stehen.

11. Kabelführungselement nach einem der Ansprüche 6 bis 10, **dadurch gekennzeichnet, dass** die Verbindungselemente (5) der gegeneinander verschwenkbaren Glieder (2) im Endbereich (43) der parallelen Platten (4) im Nahbereich der weiteren Platte (41) ausgebildet oder angeordnet sind.

12. Kabelführungselement nach einem der vorangegangenen Ansprüche, **dadurch gekennzeichnet, dass** die parallelen Platten (4) der einzelnen Glieder (2) in der Ausgangslage oder frei abhängenden Stellung des Kabelführungselements (1) mit ihren Seitenflächen aneinander anliegen und das Verschwenken der Glieder (2) entgegen der Verschwenkungsrichtung verhindern, wozu gegebenenfalls im gegenüberliegenden Endbereich (44) der Platten (4) an zumindest einer Seitenfläche in Richtung auf das benachbarte Glied (2) abgehende Nasen (48) ausgebildet sind.

13. Kabelführungselement nach einem der Ansprüche 10 bis 12, **dadurch gekennzeichnet, dass**
in den beiden parallelen Platten (4) des jeweiligen Gliedes (2) Ausnehmungen vorgesehen sind, in welche die Lagerwellen (32) für die gegenüber den Gliedern (2) oder Platten (4) drehbar gelagerten Führungsrollen (31) eingebracht sind.

14. Kabelführungselement nach einem der Ansprüche 10 bis 13, **dadurch gekennzeichnet, dass** die Führungsrollen (31) in ihrem Querschnitt zu ihren Enden hin vergrößert sind, wobei insbesondere der Außenmantel der Führungsrollen (31) im Längsschnitt die Form einer konkav gekrümmten Kurve aufweist.

## Claims

1. Cable guide element, comprising a plurality of links (2) connected in a chain-like manner which, in an initial position, particularly with freely suspended chain guide element (1), are arranged along a straight line,
- wherein all links (2) can be mutually pivoted in relation to their respective adjacent links (2) in the same the pivot plane (99),
- wherein a number of links (2), preferably all links (2), comprise two parallel plates (4), which extend parallel to the pivot plane (99) of the cable guide element (1) and form between them-selves a receiving space (46) for a cable to be guided,
- wherein a number of links (2), preferably all links (2), comprise guide elements (3) in said receiving space (46) for guiding a cable,
- wherein connection elements (5) are provided in an end region (43) of the parallel plates (4) which connect the mutually pivoted links (2),
**characterised in,**
**that** in an end region (44) opposite to said end region (43) of the parallel plates (4) counter weights (6) are arranged on at least two of the links (2), so that the centre of gravity (9) of the cable guide element (1), in its initial position, particularly in its freely suspended position, is in the receiving space (46) between the guide elements (3) and the opposite end regions (44).

2. Cable guide element according to claim 1, **characterised in that** the counter-weights (6) are realised in the form of bolts (61) or bars, which are arranged in the opposite end region (44) of the parallel plates (4) and connect these end regions (44).

3. Cable guide element according to claim 1 or 2, **characterised in that** the counter-weights (6) are arranged at least on the first and the last link (2)

4. Cable guide element according to any of the preceding claims, **characterised in that** in each one of the two parallel plates a clearance (62) is provided, through which the counter-weights (6) in the form of a bolt (61) are put through,
- wherein optionally the central axis of the bolt (61) extends perpendicularly to the pivot plane (99) and/or is perpendicular to the parallel plates (4)

5. Cable guide element according to any of the preceding claims, **characterised in that**
the ratio of the density of the material of the counter-weights (6) or of the bolts (61) to the average density of the remaining parts of the cable guide element (1) is at least 2:1 and in particular is in the range between 4:1 and 6:1 and/or that the counter-weights (6) consist substantially of an iron alloy, whereas the remaining components of the cable guide element (1) are formed with plastic material and/or light metals, particularly of aluminium.

6. Cable guide element according to any of the preceding claims, **characterised in that** the plates (4) are each connected to another plate (41) in one of their end regions, particularly in the end region (43), wherein the parallel plates (4) and the other plate (41) of one respective link (2) are formed integrally as an U-profile (47) in the form of a bent stamped part.

7. Cable guide element according to any of the preceding claims, **characterised in that**
the links (2), from their initial position or their freely suspended position, can be pivoted only into a predetermined pivoting direction, whereas pivoting into the opposite direction is impeded or prevented.

8. Cable guide element according to any of the preceding claims, **characterised in**
- **that** adjacent links (2) comprise limitation elements (49) on the other plate (41) and/or on the parallel plates (4), which impede further pivoting in relation to the initial position having reached a pivot position or with a predetermined pivoting angle, in particular, of 5°-25°, particularly by interengagement.

9. Cable guide element according to any of the preceding claims, **characterised in**
- **that** the connection elements (5) are formed in the form of bearing flanges (51) rigidly connected to the links (2), particularly being bent from the same stamped part, and that the bearing flanges (51) are pivotably connected to a flange or a plate (4) of an adjacent link (2) by bearing bolts (52) or rivets (52).

10. Cable guide element according to any of the preceding claims, **characterised in**
- **that** the guide elements (3), preferably the axes of guide pulleys (31) forming the guide elements (3), are perpendicular to the pivot plane (99) of the cable guide element (1).

11. Cable guide element according to any of claims 6 to 10, **characterised in that** the connection elements (5) of the links (2) mutually pivoting are formed or are situated in the end region (43) of the parallel plates (4) in the close-up region of the other plate (41).

12. Cable guide element according to any of the preceding claims, **characterised in that** in the initial position or the freely suspended position, the parallel plates (4) of the individual links (2) engage each other with their lateral surfaces and prevent pivoting of the links (2) opposite to the pivoting direction, to which end, optionally, noses (48) are formed in the opposite end region (44) of the plates (4) on at least one lateral surface, which protrude in the direction towards the adjacent link (2).

13. Cable guide element according to any of claims 10 to 12, **characterised in that** clearances are provided in the two parallel plates (4) of the respective link (2), into which the bearing shafts (32) for the guide pulleys (31), rotatably supported with respect to the links (2) or plates (4), are introduced.

14. Cable guide element according to any of claims 10 to 13, **characterised in that** the cross-sections of the guide pulleys (31) increase towards their ends, wherein in particular the outer periphery of the guide pulleys (31), in longitudinal cross-section, has the shape of a curved bend.

## Revendications

1. Elément de guidage de câbles, comprenant une pluralité de chaînons (2) connectés en forme de chaîne, qui, dans une position initiale, particulièrement avec l'élément de guidage de câbles (1) librement suspendu, sont disposés le long d'une ligne droite,
- dans lequel tous les chaînons (2) sont pivotants l'un par rapport à l'autre et par rapport de ses chaînons (2) adjacents dans le même plan de balayage (99),
- dans lequel un nombre de chaînons (2), de préférence tous les chaînons (2), comprend deux plaques (4) parallèles s'étendant parallèlement au plan de balayage (99) de l'élément de guidage de câbles (1), qui forment un espace de réception (46) pour un câble à guider,
- dans lequel un nombre de chaînons (2), de préférence tous les chaînons (2), comprend des éléments de guidage (3) dans l'espace de réception (46) pour guider un câble,
- dans lequel, dans une zone terminale (43) des plaques (4) parallèles, des éléments de connexion (5) sont prévus, qui relient les chaînons (2) pivotants l'un par rapport à l'autre, **caractérisé en ce,**
**que** des contrepoids (6) sont disposés à au moins deux des chaînons (2) dans une zone terminale (44) des plaques parallèles opposée à la zone terminale (43),
de forme, que le centre de gravité (9) des éléments de guidage de câbles (1), dans sa position initiale, particulièrement dans sa position librement suspendue, est situé dans l'espace de réception (46) entre les éléments de guidage (3) et les zones terminales (44) opposées.

2. Elément de guidage de câbles selon la revendication 1, **caractérisé en ce, que** les contrepoids (6) sont réalisés en forme des boulons (61) ou des entretoises, qui sont disposés dans la zone terminale opposée (44) des plaques (4) parallèles, et relient ces zones terminales (44).

3. Elément de guidage de câbles selon la revendication 1 ou 2, **caractérisé en ce, que** les contrepoids (6) sont disposés au moins au premier et au dernier chaînon (2).

4. Elément de guidage de câbles selon une quelconque des revendications précédentes, **caractérisé en ce, qu'**un creux (62) est prévu respectivement dans les deux plaques (4) parallèles, à travers duquel les contrepoids (6) sont amenés en forme d'un boulon (61),
- l'axe central du boulon (61), le cas échéant, s'étendant perpendiculairement au plan de balayage (99) et/ou est perpendiculaire aux plaques (4) parallèles.

5. Elément de guidage de câbles selon une quelconque des revendications précédentes, **caractérisé en ce,**
**que** le rapport de la masse volumique du la matière des contrepoids (6) ou des boulons (61) à la masse moyenne volumique de la matière des autres parties de l'élément de guidage de câbles (1) est au moins 2:1, et est en particulier dans la gamme entre 4:1 et 6:1, et/ou
les contrepoids (6) consistent sensiblement d'un alliage de fer, tandis que les autres composants de l'élément de guidage de câbles (1) sont formés avec une matière synthétique et/ou des métaux légers, particulièrement d'aluminium.

6. Elément de guidage de câbles selon une quelconque des revendications précédentes, **caractérisé en ce, que** les plaques (4) sont reliées à une autre plaque (41) à une de ses zones respectives terminales, en particulier dans la zone terminale (43), dans lequel les plaques parallèles (4) et l'autre plaque (41) d'un chaînon (2) respectif sont formées en une partie comme un profilé en U (47) en forme d'une pièce découpée courbée.

7. Elément de guidage de câbles selon une quelconque des revendications précédentes, **caractérisé en ce, que**
les chaînons (2) sont pivotants à partir de sa position initiale ou position librement suspendue seulement dans une direction prédonnée de balayage, tandis qu'un balayage en direction opposée est supprimé ou empêché.

8. Elément de guidage de câbles selon une quelconque des revendications précédentes, **caractérisé en ce,**
- **que** des chaînons (2) adjacents sur l'autre plaque (41) et/ou sur les plaques parallèles (4) présentent des éléments limiteurs (49), qui empêchent un balayage ultérieur, en particulier par contiguïté, avec une position atteinte de balayage ou avec un angle de balayage prédéterminé, particulièrement de 5°-25°.

9. Elément de guidage de câbles selon une quelconque des revendications précédentes, **caractérisé en ce,**
- **que** les éléments de connexion (5) sont formés en forme des brides de coussinet (51) rigidement reliées avec les chaînons (2), particulièrement courbées du même pièce découpée, et que les brides de coussinet (51) sont reliées d'une manière pivotante à une bride ou une plaque (4) d'un chaînon adjacent (2) au moyen des boulons de logement (52) ou des rivets (52).

10. Elément de guidage de câbles selon une quelconque des revendications précédentes, **caractérisé en ce,**
- **que** les éléments de guidage (3), de préférence les axes des poulies de guidage (31) formant les éléments de guidage (3), sont perpendiculaire au plan de balayage (99) de l'élément de guidage de câbles (1).

11. Elément de guidage de câbles selon une quelconque des revendications 6 à 10, **caractérisé en ce, que** les éléments de connexion (5) des chaînons (2) pivotants l'un par rapport à l'autre sont formés ou disposés dans la zone terminale (43) des plaques parallèles (4) dans une zone proche à l'autre plaque (41).

12. Elément de guidage de câbles selon une quelconque des revendications précédentes, **caractérisé en ce**, les plaques parallèles (4) des chaînons (2) individuels, dans la position initiale ou librement suspendue, portent bien avec ses surfaces latérales et empêchent le pivotement des chaînons (2) contre la direction de balayage, à quel effet des talons (48) à au moins une surface latérale, partant en direction du chaînon (2) adjacent, sont formés, le cas échéant, dans la zone terminale opposée (44) des plaques (4).

13. Elément de guidage de câbles selon une quelconque des revendications 10 à 12, **caractérisé en ce, que**
des creux sont prévus dans les deux plaques parallèles (4) du chaînon (2) respectif, dans lesquels les arbres de palier (32) pour les poulies de guidage (31) logés d'une façon rotative par rapport aux chaînons (2) ou plaques (4) sont insérés.

14. Elément de guidage de câbles selon une quelconque des revendications 10 à 13, **caractérisé en ce, que** les coupes en travers des poulies de guidage (31) sont augmentées vers ses bouts, dans lequel en particulier la nappe extérieure des poulies de guidage (31), en coupe longitudinale, présente la forme d'une courbe courbée d'une manière concave.
